Europäisches Patentamt

European Patent Office

Office européen des brevets

(11) Publication number: **0 088 872**
A2

## EUROPEAN PATENT APPLICATION

(21) Application number: 83100876.8

(22) Date of filing: 31.01.83

(51) Int. Cl.³: **B 23 P 19/08**

(30) Priority: 15.03.82 US 358146

(43) Date of publication of application:
21.09.83 Bulletin 83/38

(84) Designated Contracting States:
DE FR GB IT

(71) Applicant: ABBOTT LABORATORIES
14th Street and Sheridan Road
North Chicago, Illinois 60064(US)

(72) Inventor: Choudhury, Hrishikesh
3881 Woodlawn Avenue
Gurnee, IL 60031(US)

(72) Inventor: Zaha, Juergen Heinz
Twin Lake, Rt. 1 P.O. Box 453
Moore South Carolina 29369(US)

(74) Representative: Modiano, Guido et al,
MODIANO, JOSIF, PISANTY & STAUB Modiano &
Associati Via Meravigli, 16
I-20123 Milan(IT)

(54) Semi-automatic assembly of flexible tubing to a component.

(57) An apparatus for semiautomatically assembling a length of flexible tubing (54) on a component part (53) which avoids the use of bonding solvents yet affords a secure placement of the tubing thereon. The apparatus and method assures a secure fitment by stretching the tubing (54) to a predetermined dimension which is larger than the outside dimension of the portion on which the tubing is to be placed on the component part (53), and while in such a position a portion of the component (53) is automatically placed therein. An important feature in placing the tubing (54) on the component (53) is the later removal from the jaw members (29) which effect the stretching of the tubing (54). This is effected by a centrally positioned stripper cam (42) which displaces the tubing (54) from the jaw members (29) while simultaneously a push-rod (57) imparts a force against the component (53) in the same direction as the stripper cam (42). A center feed passage (55) is provided for the component part (53) which lends itself to automatic feeding. Jaw movement is afforded through cam followers (50, 51) connected to the jaw members (29) which engage cam surfaces (83, 104) on the stripper cam (42).

Two separate open positions can be provided for the jaw members (29) to permit components (53) with various projections to be displaced from between the jaws (29).

FIG. 6

This invention relates to an apparatus for semiautomatically assembling a length of flexible tubing onto a component part. More particularly, it relates to an apparatus for securing a length of flexible I.V. tubing to a component in an I.V. set without the use of solvents, the apparatus affording uniform stretching of the tubing by jaw members and placement of the tubing on a portion of the component parts, at a variable depth, after which the tubing is stripped from the jaw members by a simultaneous movement of a stripper cam which engages the tubing and a rod member engaging the commodity.

In the assembly of an I.V. administration set, it is common practice to attach a length of flexible tubing to a component in the set such as a filter, needle adapter or a drip chamber. By placing the tubing in a solvent for the tubing and while in a partially dissolved state, the tubing is fitted onto the component and the solvent will then effect a fusing of the surfaces of the tubing and the commodity. A problem which arises in utilizing a solvent bond is the possibility of some residual solvent vapor remaining in the I.V. set, if not properly primed prior to administration. Another problem in utilizing a solvent-type bonding is that an extra step must be taken during the procedure in order to remove excess solvent as well as the problem in attempting to force-fit a slightly smaller diameter tubing over a commodity which has a slightly larger external diameter.

One solventless method for securing a component to flexible tubing employs jaw members to expand the tubing with a portion of the component being placed in the expanded tubing. Placement of the component is through the center of the expanded jaws.

The prior art does not provide a method of solventless bonding of flexible tubing to a component which will afford a secure fitment of the tubing to the commodity and do so in a manner which requires few materials and a minimum amount of cost. Those apparatus which do not employ solvents and utilize jaws to expand the tubing have created problems in effecting a nonuniform stretching of the tubing. This has caused assembly problems due to the jaws opening in a nonparallel or duck-bill type movement, thus creating a greater stretching of the tubing at the mouth of the jaws than at the inner end.

It is an advantage of the present invention to provide an apparatus for securing a length of flexible tubing to a commodity without the use of a solvent. Other advantages are an apparatus for solventless sealing of flexible tubing to an I.V. component which affords consistently good sealing between the tubing and the component, effects a sealing between a length of flexible tubing and the components such that it is adapted to a semiautomatic and efficient operation, accomplishes a securing of polyvinylchloride tubing to a rigid plastic component without the introduction of an additive component; and an apparatus for placing a length of I.V. tubing on I.V. components of various sizes and geometric configurations which does not appreciably add to the cost of the set.

The foregoing advantages are accomplished and the shortcomings of the prior art are overcome by the present semiautomatic apparatus for securing a length of flexible plastic tubing onto a component with an external diameter larger than the internal diameter of the tubing without the use of a solvent or adhesive.

The apparatus employs a multiplicity of jaw members, each having a longitudinal portion and dimension to fit within the length of the tubing. A housing and head section provide pivotal movement of the jaw members. A stripper cam is positioned for movement with respect to the jaw members and cam means are provided between the jaw members and the stripper cam to afford movement of the jaw members from a closed position to an open position spaced therefrom while maintaining a parallel relationship with respect to the jaw members. Passage means are defined within the stripper cam means for movement of the commodity therethrough. Commodity feed means are operatively positioned with respect to the passage means for placement and movement of the commodity therethrough. Drive means are provided to move the stripper cam in a forward and backward motion with respect to the jaw members. In a preferred manner, the commodity feed means includes a push rod member for movement of the commodity through the passage means and the means to move the stripper cam is synchronized with movement of the push rod member for simultaneous forward movement for removal of the tubing from the jaws and onto the commodity. If desired and for the purpose of accommodating commodities of different sizes and geometric configurations, the stripper cam and jaw members have cam means which are designed to afford a spacing apart of the jaw members in two different open positions with one of the open positions being a full open position. To afford passage of the completed unit, a passageway is disposed in stripper cam. The use of three jaws in conjunction with the stripper cam has been found to work well with the camming means between the two elements being afforded by two roller members forming a portion of the cam follower on the jaws and two camming surfaces on the stripper cam. The drive means to move the stripper cam means and push rod member are provided in part by independent rotating cam surfaces and cam followers including linkage arms to afford linear motion to the stripper cam and push rod member. For maximum efficiency, two of the assembly apparatus are housed in a single machine and the commodity feed means includes a shuttle means to place the commodity in the passage means.

A better understanding of the present assembly apparatus and the method of this invention will be had by reference to the drawings wherein:

FIGURE 1 is a perspective view of the assembly unit of this invention illustrating two of the novel assembly apparatus of this invention accommodated in a housing unit.

FIGURE 2 is a partial front perspective view of the assembly apparatus illustrating the jaw members.

FIGURE 3 is a perspective view of a commodity with a length of tubing secured thereto by the apparatus of this invention.

FIGURE 4 is a view similar to FIGURE 3 but illustrating a different commodity with the assembled tubing.

FIGURE 5 is a partial view in vertical section showing the assembly apparatus of this invention in a dwell position with respect to the commodity and the tubing.

FIGURE 6 is a view similar to FIGURE 5 showing the assembly apparatus in an insert position.

FIGURE 7 is a view similar to FIGURE 5 illustrating the stripping of the tubing and commodity from the jaw members.

FIGURE 8 is a view similar to FIGURE 7 showing the assembly apparatus in an ejection mode.

FIGURE 9 is an end view taken along lines 9-9 of FIGURE 5.

FIGURES 10, 11, 12 and 13 are views in vertical section taken along lines 10, 11, 12 and 13, respectively in FIGURE 5.

FIGURE 14 is an end view taken along line 14 of FIGURE 6.

FIGURE 15 is a perspective view of the head portion of the assembly apparatus showing the jaw members engaging and stretching the tubing prior to insertion of the commodity.

FIGURE 16 is a view similar to FIGURE 15 illustrating the stripping step of the commodity from the jaw members.

FIGURE 17 is a view in side elevation and in partial vertical section showing the driving mechanism for one of the assembly apparatus.

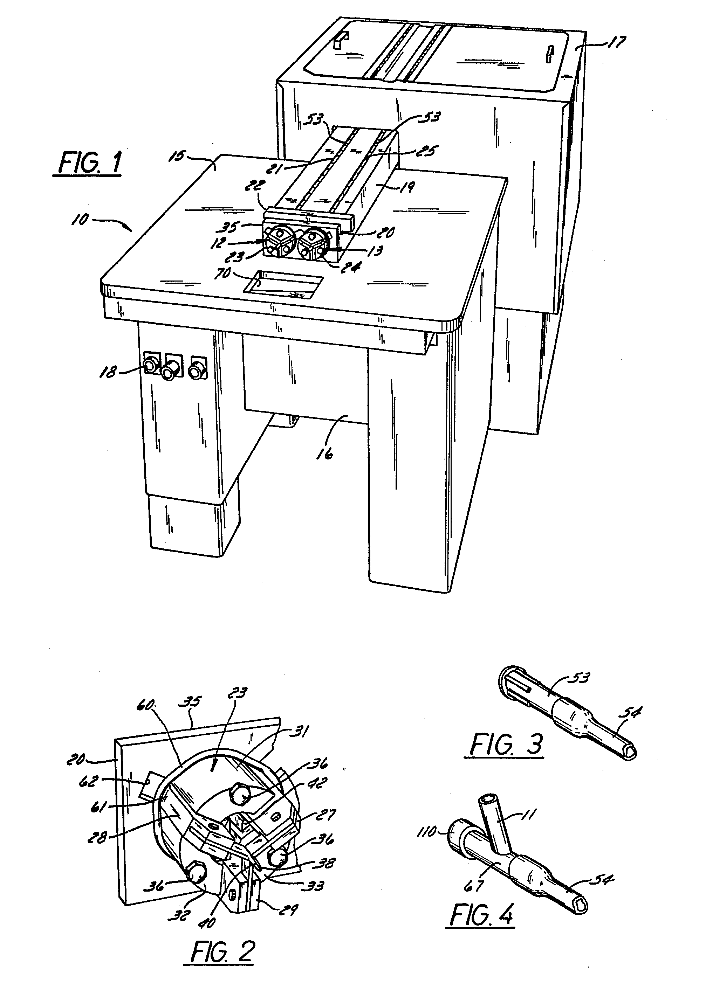

Proceeding to a detailed description of the present apparatus of this invention, and referring particularly to FIGURE 1, the novel apparatus is indicated generally by the numeral 10 and includes two of the assembly units generally 12 and 13 supported on table portion 15 and extending onto a component feed cabinet 17. A conveyor portion 19 with visual conveyor conduits 21 and 25 extends between the head section or housing 20 and feed cabinet 17. Head section 20 includes a shuttle bar 22 with head assemblies 23 and 24. Included with table portion 15 are contact switches 18 and drive housing 16.

As best seen in FIGURE 2, each head section such as 23 includes three jaw members 27, 28 and 29 pivotally mounted between block members 31, 32 and 33 which are secured to head plate 35 by bolts 36. Each jaw member 27, 28 and 29 terminates in jaws such as 38.

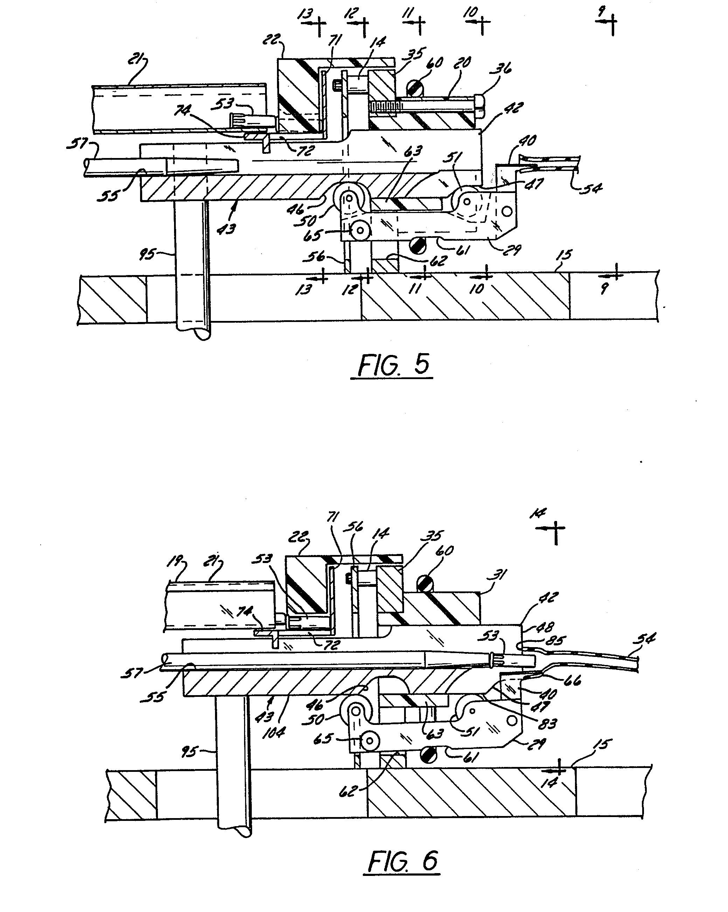

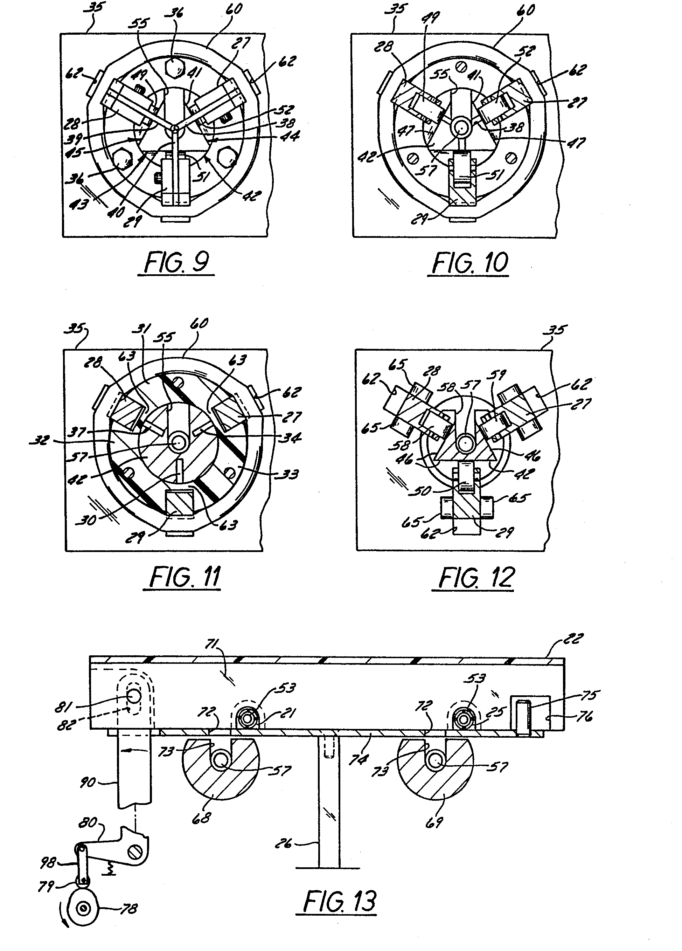

FIGURES 5, 6, 7 and 8 illustrate the various positions and camming action of the jaw members 27, 28 and 29 as well as stripper cam 42. FIGURES 9 - 16 show the various elements forming the head section 20 for each assembly unit 12 and 13 with assembly unit 12 being described in detail. It will be appreciated that each assembly unit will include one stipper cam 42 and for purposes of illustration in FIGURES 5 - 8, one jaw member 29 is illustrated. Stripper cam 42 will provide a camming surface generally 43 which will include two recessed camming surfaces 46 and 47 as well as linear camming surfaces 104 and 83 for engagement with rollers 50 and 51 which are rotatably mounted on jaw member 29. A plate portion 63 is placed adjacent camming surface 47 to provide an additional camming surface for roller 51. A commodity 53 in the form of a tubular body to form a reseal unit is positioned above a passage means 55 disposed centrally in the stripper cam 42. An oscillating and transversely movable shuttle mechanism 22 is disposed above passageway 55 in which is placed push rod 57. A biasing means in the form of an elastic band 60 is accommodated in slot 61 of the jaw members 27, 28 and 29 (see FIGURE 2) for biasing the roller cams such as 50 and 51 of the jaw members against the camming surfaces 43, 46 and 47 of stripper cam 42. Suitably, slots such as 62 are provided in head plate 35 to permit lateral pivoting of the jaw members. Jaw member 29 is pivotally attached to head section 20 through a pivot roller 65 suitably positioned between head plate 35 and backing plate 56 by suitable means such as by a mounting shaft. The two plates 35 and 56 are secured by bolt 14. A jaw 40 extends upwardly and outwardly from jaw member 29.

As best seen in FIGURES 9, 10, 11 and 12, it will be better appreciated that stripper cam 42 will provide three opposing camming surfaces 43, 44 and 45 for contact with rollers 51, 50, 52, 59 and 49, 58 of the respective jaw members 29, 27 and 28. Each of the camming surfaces 43, 44 and 45 will include two indented or depressed surface portions such as 46 and 47 as well as adjacent linear camming surfaces 83 and 104 for contact with the respective rollers. It will also be seen and particularly, in FIGURE 11, that stripping cam 42 includes radially projecting slots 30, 34 and 37 for the purpose of accommodating jaws 40, 38 and 39, respectively.

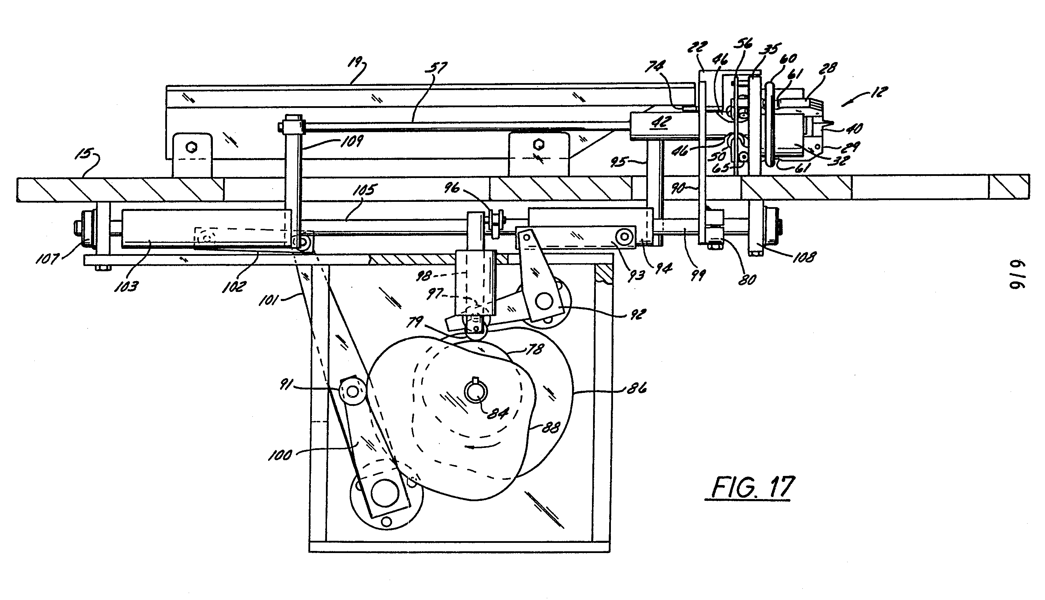

FIGURE 17 represents the driving mechanism for the main movable portions which are the stripper cam 42, the shuttle mechanism 22 and the push rod 57. Shuttle mechanism 22 is driven through a drive train including cam wheel 78 which is engaged by cam follower 79 secured to connector 98 to impart a rotary motion to shaft 99 through linkage 96. Shaft 99 is connected to bell crank 80 and includes arm 90 with slot 82. As best seen in FIGURE 13, slot 82 in arm 90 and pin 81 in shuttle bar 71 will provide the necessary oscillating motion to the shuttle mechanism 22. Retentive movement will be afforded by pin 75 extending from base plate 74 into compartment 76 of shuttle bar 71 with base plate 74 being secured by support 26. The stripper cam 42 is driven by cam wheel 86 which is engaged by cam follower 97 supported on bell crank 92 which is secured to connector 93. Another connector 94 is attached to connector 93 and in turn to arm 95 which is fastened to stripper cam 42. A common drive shaft 84 will drive cams 78 and 86 as well as cam wheel 88. Cam wheel 88 will be engaged by cam follower 91 pivotally secured on cam arm 101 by an extension arm 100. A connector 102 is attached to cam arm 101 and in turn with guide block 103 slidably guided on guide rod 105. Guide rod 105 is suitably positioned beneath table portion 15 through supports 107 and 108. Arm 109 is attached to guide block 103 for supplying linear motion to push rod 57.

The previously described driving mechanism was illustrated for a single assembly unit 12. It will be appreciated that as two assembly units 12 and 13 are employed, the stripper cam such as 42 and push rod 57 of each unit can be driven in tandem by employing duplicate drive systems as previously described. Suitable passages will be disposed in table portion 15 for this purpose.

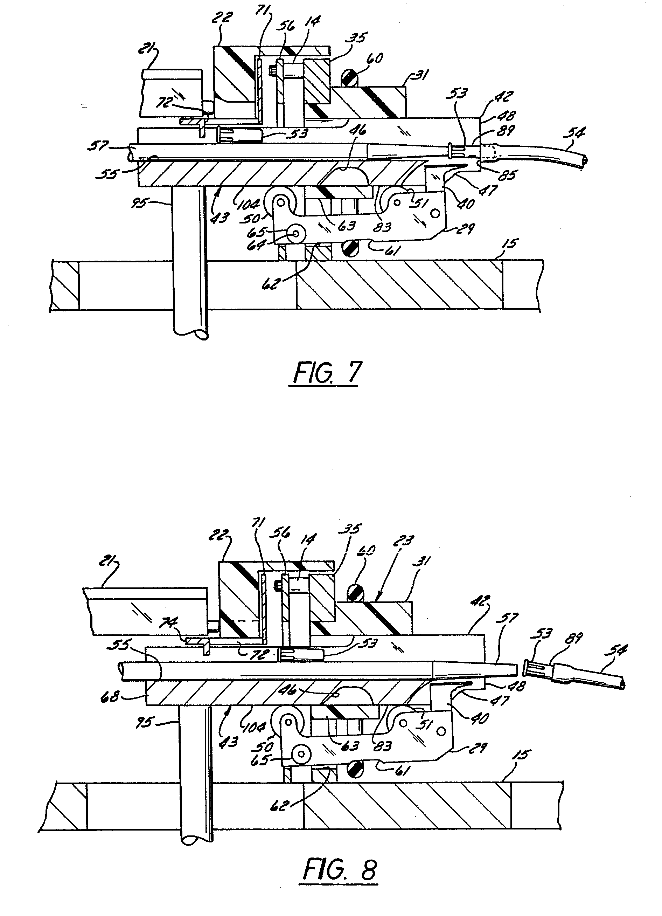

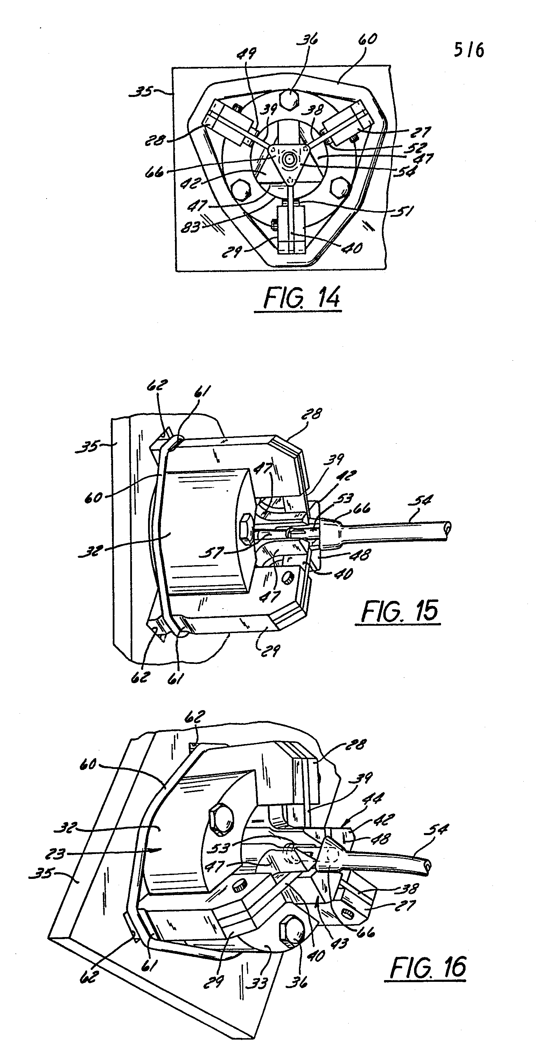

A better understanding of the advantages of the assembly units will be had by a description of the operation of assembly apparatus 10 and the assembly units 12 and 13. As the drive mechanism for the stripper cam 42, the shuttle 22 and the push rod 57 has already been described this will not be repeated except where such movements are necessary to understand the feeding of commodities and the attachment of the commodity to the flexible tubing 54. As best seen in FIGURES 1 and 13, commodities will be stored in feed cabinet 17 and by means of the usual vibratory separator commodities 53 will be fed along conveyor conduits 21 and 25 in the direction of shuttle mechanism 22. As the shuttle 22 oscillates in a lateral direction as viewed in FIGURE 13, commodities 53 will be moved from conduits 21 and 25 into slots 73 by dropping through apertures 72 in base plate 74 and into guide members 68 and 69 of the stripper cams such as 42. The preliminary movement of the commodity before it drops through the aperture is shown in FIGURE 5. FIGURE 5 represents the dwell mode of the assembly apparatus wherein longitudinally disposed jaws 38, 39 and 40 will be in a closed position and adjacent to each other for insertion into a length of tubing 54. This is also depicted in FIGURE 2. It will be noted that in this particular mode the rollers 50 and 51 as well as the other rollers 52, 59, 49 and 58 of the respective jaw members 29, 27 and 28 will be seated in indented or grooved cam surfaces 46 and 47 of camming surface 43 and in the other respective indented cam surfaces 46 and 47 of camming surface 43 of camming surfaces 44 and 45 of stripper cam 42. The next mode of action is the insert mode illustrated in FIGURE 6. In this particular position it will be seen that the push rod 57 will have advanced a commodity 53 over central passageway 55 in the stripper cam 42 and in the direction of the jaws 38, 39 and 40. At the same time stripper cam 42 will move in a forward direction thereby causing the respective rollers such as 50 and 51 to ride out of the indented cam surfaces 46 and 47 onto the straight side wall cam surfaces 83 and 104. This motion will effect a spreading apart of the jaws 38, 39 and 40 as well as stretch the tubing. While in this position, rod 57 will advance commodity 53 into the stretched portion 66 of tubing 54 as seen in FIGURES 6 and 14. Because of the three jaw motion, the tubing will assume a triangular cross-section as indicated in FIGURE 14 which will be larger than the outside diameter of commodity 53. FIGURE 7 illustrates the strip mode of the assembly unit wherein there will be a continued forward movement of stripping cam 42 as well as push rod 57. This simultaneous forward movement will cause the forward end 48 of stripper cam 42 to engage the end 85 of tubing 54 and to move it off the jaws 38, 39 and 40 and the tubing onto the tubular portion 89 of the commodity 53. This removal is facilitated by the fact that push rod 57 is simultaneously pushing on commodity 53. FIGURE 8 shows the eject mode of the assembly apparatus. The continued movement of the push rod 57 will cause the assembled commodity 53 to be ejected from the assembly unit and drop down into a suitable receptacle or aperture such as 70 (see FIGURE 1). In those instances where a commodity is of a substantial size, the jaws 38, 39 and 40 can be radially expanded or separated to a larger extent as indicated in FIGURE 8 through the placement of plates such as 63 for engagement with the forward cam rollers 49, 51 and 52.

As illustrated in FIGURES 3 and 4, the apparatus of this invention is susceptible of placing tubing 54 on a commodity 53 which could be used as a reseal unit in an I.V. administration set with a placement of a reseal cap 110 over the end thereof. Due to the fact that stripper cam 42 has an opening 41 at the top thereof, it can accommodate I.V. administration component devices of various configurations such as a Y-seal unit 67 with a lateral extension 11.

An important feature of the assembly apparatus 12 or 13 is the fact that the jaws 38, 39 and 40 assume a parallel position as they expand the tubing. This creates a uniform stretching of the tubing along the length of the portion that it is stretched. It will be appreciated that conventional methods stretch tubing for placement over a connecting section wherein the outward portion is stretched to a greater degree than the inner portion as normally happens when a duck-bill type device would be used similar to the jaws on a pair of pliers. The uniform stretching effected by this invention assures a rigid connection as well as one that can be repeated with a larger number of parts. The connection provided by the apparatus of this invention will survive a higher test than conventional solvent bonding.

Another important feature in addition to the parallel action of the jaw members is the stripping action of the commodity from the apparatus once the tubing has been assembled thereon. It will be appreciated that the central feeding feature permits a high speed and semiautomatic device. The stripping is accomplished by the simultaneous forward motion of both the push rod 57 and the stripping cam 42.

In the description of the assembly units 12 or 13, polyvinylchloride or polyurethane tubing is the preferred composition of the tubing which is utilized. It will be appreciated that other types of flexible tubing including rubber and other plastics suitable for I.V. tubing could be employed. The commodities 53 and 67 are formed with a housing which is fabricated from a resinous plastic material such as A.B.S. or rigid polyvinylchloride. The apparatus of this invention will operate as effectively with components made from other materials such as rigid steel. As indicated earlier, various components of a wide variety and geometric configurations and sizes can be accommodated by the present apparatus due to the unique construction and arrangement of the stripper cam.

It will thus be seen that through the present invention there is provided an apparatus which can semiautomatically assemble flexible tubing on a rigid commodity member without the use of adhesives or solvents. The apparatus employs a unique action of the jaw members as well as a stripper cam to result in the uniform stretching of the tubing as well as removable from the stretching jaws in a fast and efficient manner. The apparatus is of a durable construction thus assuring a long life and dependable use.

The foregoing invention can now be practiced by those skilled in the art. Such skilled persons will know that the invention is not necessarily restricted to the particular embodiments presented herein. The scope of the invention is to be defined by the terms of the following claims as given meaning by the preceding description.

## CLAIMS

1. An assembly unit for securing a length of flexible tubing having a predetermined internal diameter to a commodity with a tubular portion having an external diameter larger than said predetermined internal diameter comprising:

a housing member;

a multiplicity of jaw members pivotally supported in said housing member, each having a longitudinal portion dimensioned to fit within said length of flexible tubing;

a stripper cam operatively positioned for movement with respect to said jaw members;

cam means operatively associated with said jaw members and said stripper cam to move said jaw members from a closed position to a position spaced thereform while maintaining a parallel relationship with respect to said jaw members;

passage means defined within said stripper cam for movement of said commodity therethrough;

commodity feed means operatively positioned with respect to said passage means for placement and movement of said commodity therethrough; and

drive means to move said stripper cam in a forward and backward motion with respect to said jaw members.

2. The assembly unit as defined in Claim 1 wherein said commodity feed means includes a push rod member for movement of said commodity through said passage means and said means to move said stripper cam is synchronized with said movement of said push rod member for simultaneous forward movement.

3. The assembly unit as defined in Claim 2 wherein said cam means is constructed and arranged to afford a spacing apart of said jaw members in two different open positions with one of said positions being a full open position.

4. The assembly unit as defined in Claim 2 wherein said stripper cam includes a passageway therebetween to permit a portion of said commodity to pass therethrough.

5. The assembly unit as defined in Claim 2 wherein said cam means includes a camming surface defined by said stripper cam and a cam follower connected to said jaw members.

6. The assembly unit as defined in Claim 5 wherein three of said jaw members are operatively connected to said housing member and said stripper cam is centrally positioned therebetween.

7. The assembly unit as defined in Claim 2 further including biasing means operatively associated with each said jaw member to bias said jaw member to a closed position.

8. The assembly unit as defined in Claim 5 wherein said cam follower is defined in part by two roller members and said camming surface is defined by said stripper cam as two indented camming surfaces.

9. The assembly unit as defined in Claim 2 wherein said drive means to move said stripper cam means and said push rod member are provided in part by independent rotating cam surfaces and cam followers including linkage arms to afford linear motion to said stripper cam and said push rod member.

10. The assembly unit as defined in Claim 1 wherein two of said assembly units are supported and housed in a single apparatus and said commodity feed means includes a shuttle means to place said commodity in said passage means.

11. An assembly apparatus for securing a length of flexible tubing having a predetermined internal diameter to a commodity having a tubular portion with an external diameter larger than said predetermined internal diameter comprising:

a housing member;

a multiplicity of jaw members pivotally supported in said housing member having a longitudinal dimension to fit into said tubing;

a stripper cam operatively positioned for movement with respect to said jaw members;

cam means operatively associated with said jaw members and said stripper cam to move said jaw members from a closed position to a position spaced therefrom while maintaining a parallel relationship with respect to said jaw members; and

passage means defined within said stripper cam for movement of said commodity therethrough;

said stripper cam adapted to be connected to means to move said stripper cam means in a forward and backward motion with respect to said jaw members.

12. The assembly apparatus as defined in Claim 11 wherein said cam is constructed and arranged with respect to said stripper cam and said jaw members to afford a spacing apart of said jaw members in two different open positions with one of said positions being a full open position.

13. The assembly apparatus as defined in Claim 12 wherein said stripper cam includes an additional passageway therebetween to permit a portion of said commodity to pass therethrough.

14. The assembly apparatus as defined in Claim 12 wherein said cam means includes a camming surface defined by said stripper cam and a cam follower connected to said jaw members.

15. The assembly apparatus as defined in Claim 12 wherein three of said jaw members are operatively connected to said housing member and said stripper cam is centrally positioned therebetween.

16. The assembly apparatus as defined in Claim 12 further including biasing means operatively associated with each said jaw member to bias said jaw member to a closed position.

17. The assembly apparatus as defined in Claim 14 wherein said cam follower is defined in part by two roller members and said camming surface defined by said stripper cam is provided in part by two indented camming surfaces.

FIG. 1

FIG. 2

FIG. 3

FIG. 4

2/6

FIG. 5

FIG. 6

3/6

FIG. 7

FIG. 8

FIG. 9

FIG. 10

FIG. 11

FIG. 12

FIG. 13

0088872

5/6

FIG. 14

FIG. 15

FIG. 16

*FIG. 17*